# EUROPÄISCHE PATENTSCHRIFT

(11) **EP 2 146 815 B1**
(45) Veröffentlichungstag und Bekanntmachung des Hinweises auf die Patenterteilung: **06.06.2012**
(21) Anmeldenummer: 08735738.0
(22) Anmeldetag: 03.04.2008
(51) Int. Cl.: B23D 57/00

(54) **DRAHTSÄGE UND VERFAHREN ZUR HERSTELLUNG EINER DRAHTSÄGE**
WIRE SAW AND METHOD FOR PRODUCING A WIRE SAW
SCIE À FIL ET PROCÉDÉ DE FABRICATION D'UNE SCIE À FIL

(30) Priorität: 04.04.2007 DE 102007016334
(43) Veröffentlichungstag der Anmeldung: 27.01.2010
(73) Patentinhaber: Siemens Aktiengesellschaft, 80333 München (DE)
(72) Erfinder: HAMANN, Christoph, 93107 Thalmassing (DE); SCHUH, Carsten, 85598 Baldham (DE)
(86) Internationale Anmeldenummer: PCT/EP2008/053989
(87) Internationale Veröffentlichungsnummer: WO 2008/122564

(56) Entgegenhaltungen:
- WO-A-2004/071708
- JP-A- 2000 094 298

## Beschreibung

Die Erfindung betrifft eine Drahtsäge zum Trennen einer Vielzahl von keramischen Bauelementen aus einem keramischen Bauelementeblock und ein Verfahren zum Trennen einer Vielzahl von keramischen Bauelementen aus einem keramischen Bauelementeblock.

Keramische Bauelemente sind beispielsweise Piezo-Stapel oder Piezo-Stacks, welche bei der Herstellung von Piezo-Aktoren verwendet werden.

Ein Piezoaktor besteht im Allgemeinen aus mehreren Piezo-Keramikplatten. Eine Piezo-Keramik ist ein Material, das sich aufgrund des piezoelektrischen Effektes beim Anlegen einer elektrischen Spannung ausdehnt. Solche Piezo-Keramiken bilden die Basis für die Piezoaktoren, die beim Anlegen einer Spannung einen Verfahrweg von einigen Mikrometern realisieren. Die Piezo-Keramik weist elektrische Dipolmomente auf, die jeweils innerhalb von Weiss'schen Bezirken, die gegeneinander abgegrenzt sind, eine Vorzugsrichtung aufweisen. In einem unpolarisierten Grundzustand der Piezo-Keramik sind die Vorzugsrichtungen der einzelnen Weiss'schen Bezirke ungeordnet, sodass nach außen hin keine makroskopische elektrische Polarisierung der Piezo-Keramik vorliegt.

Um den piezo-elektrischen Effekt für Piezoaktoren nutzbar zu machen, muss die Piezo-Keramik durch das Ausrichten der elektrischen Dipolmomente polarisiert werden, wonach die elektrischen Dipolmomente in allen Weiss'schen Bezirken nicht oder nur wenig von einer durch die Polarisationsachse vorgegebenen Vorzugsrichtung abweichen. Die Piezo-Keramiken werden beispielsweise als Grundkörper von Piezoaktoren eingesetzt, welche u.a. Verwendung im Kraftfahrzeugbereich, beispielsweise als elektromagnetische Wandler in Common-Rail-Einspritzanlagen für Brennkraftmaschinen, finden.

Die einzelnen oben beschriebenen Piezo-Keramiken sind beiderseits mit metallischen Elektroden bzw. Innenelektroden versehen. Wird an diese Innenelektroden eine Spannung angelegt, so reagiert die Piezo-Keramik mit einer Gitterverzerrung, die entlang der Hauptachse zu der oben bereits erläuterten nutzbaren Längenausdehnung führt. Da diese allerdings weniger als 2 Promille der Schichtdicke entlang der Hauptachse beträgt, muss zur Erzielung einer gewünschten absoluten Längenausdehnung eine entsprechend höhere Schichtdicke aktiver Piezo-Keramiken bereitgestellt werden. Mit zunehmender Schichtdicke der einzelnen Piezo-Keramik-Schichten innerhalb eines Piezo-aktors steigt jedoch auch die zum Ansprechen des Piezoaktors erforderliche Spannung. Um diese in handhabbaren Grenzen zu halten, liegen die Dicken von einzelnen Piezoschichten bei Vielschicht-Aktoren üblicherweise zwischen 20 µm und 200 µm. Ein Piezoaktor muss daher beispielsweise für eine gewünschte Längenausdehnung eine entsprechende Anzahl an einzelnen Keramikschichten aufweisen.

Es ist der Anmelderin bekannt, zur Herstellung von Piezostapel oder Piezo-Stacks beispielsweise Piezo-Keramik-Grünfolien alternierend mit Innenelektrodenmaterial in einem Stapel anzuordnen.

Der Anmelderin ist weiter intern bekannt, die Piezostapel oder Piezo-Stacks im Mehrfachnutzen zu fertigen, indem eine Vielzahl von "grünen", ungesinterten Keramikfolien oder Piezo-Keramik-Grünfolien oder Piezoschichten aufeinander gestapelt und anschließend verpresst werden. Dieser Stapel ist anschließend in eine Vielzahl von einzelnen Bauelementen zu vereinzeln oder zu trennen.

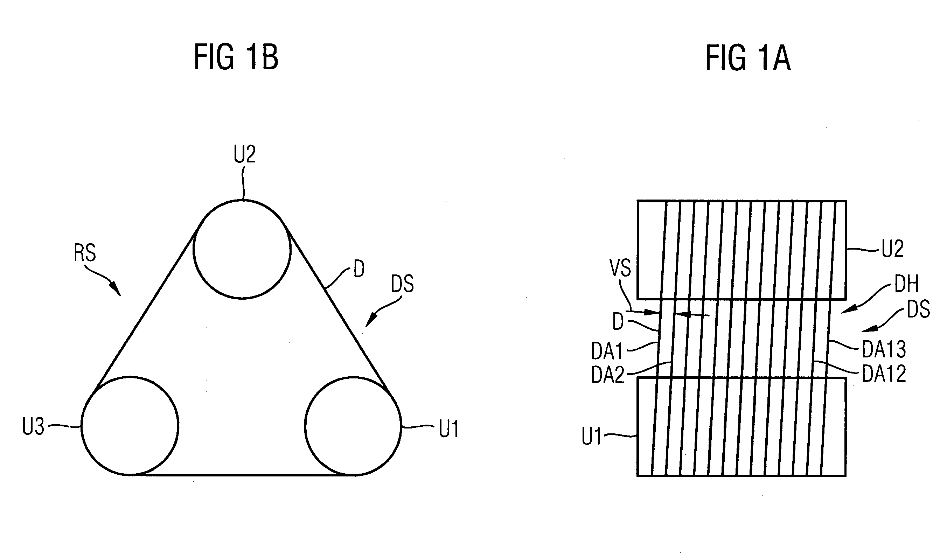

Zum Vereinzeln oder Trennen der einzelnen Bauelemente sind Drahtsägen aus der Halbleitertechnik bekannt. Dazu zeigen die Fig. 1A und 1B eine schematische Längsschnittansicht bzw. eine schematische Querschnittsansicht einer herkömmlichen Drahtsäge DS. Bei einer solchen herkömmlichen Drahtsäge DS wird eine Vielzahl von Scheiben aus einem SiliziumEinkristall mittels eines Drahtes D bzw. mittels daraus gebildeter paralleler Drahtabschnitte DA1-DA13 geschnitten. Der Draht D wird dazu mehrfach parallel über Umlenkrollen U1-U3 geführt, um eine Drahtharfe DH oder Sägegatter entstehen zu lassen. Allerdings sind die Abstände oder der jeweilige Versatz VS zwischen den einzelnen Drahtabschnitten DA1-DA13 auf ein enges Maß von wenigen Millimeter beschränkt, da sonst der Draht D aus seiner Führung springen würde bzw. der Verschleiß des Drahtes D aufgrund der mechanischen Belastung zu hoch wäre. Dieser Abstand von wenigen Millimeter ist allerdings für die notwendige Schnittbreite der Piezo-Stapel oder Piezo-Stacks zu gering, so dass die aus der Halbleitertechnik bekannten Drahtsägen nicht für das Vereinzeln von keramischen Bauelementen, wie Piezo-Stapel, verwendet werden können.

Eine solche Drahtsäge ist beispielsweise aus der Druckschrift US 4,494,523 bekannt. Bei dieser Drahtsäge wird im eigentlichen Sägebereich der Draht harfenartig über drei im Dreieck zueinander angeordnete, zumindest Werkstückdurchmesser aufweisende Umlenkrollen geführt, von denen eine angetrieben ist. Das Werkstück befindet sich anfänglich im Inneren dieser prismenartigen Anordnung und wird beim Trennvorgang von unten gegen den waagrecht gespannten Bereich des bewegten Drahtes verschoben.

Aus der JP 2000 094298 A ist eine Drahtsäge mit einem Draht und einem Rollensystem mit einer Vielzahl von Umlenkrollen bekannt. Der Draht und die Umlenkrollen sind derart angeordnet, dass eine Drahtharfe ausgebildet wird. Der Oberbegriff von Anspruch 1 basiert auf diesem Dokument.

Auch aus der WO 2004/071708 A ist eine derartige Drahtsäge bekannt. Die Drahtsäge wird für die Herstellung von magnetischen keramischen Bauelementen eingesetzt.

Demnach ist es eine Aufgabe der vorliegenden Erfindung, die keramischen Bauelemente auf einfache und insbesondere kostengünstige Weise zu vereinzeln.

Eine weitere Aufgabe ist es, ein Verfahren und eine Vorrichtung zum Trennen einer Vielzahl von keramischen Bauelementen aus einem keramischen Bauelementeblock oder Grünblock bereitzustellen, welche applikationsabhängig eingesetzt werden können.

Erfindungsgemäß wird zumindest eine dieser gestellten Aufgaben durch eine Drahtsäge mit den Merkmalen des Patentanspruchs 1 und/oder durch ein Verfahren zum Herstellen einer Drahtsäge mit den Merkmalen des Patentanspruchs 2 und/oder durch ein Verfahren zum Trennen einer Vielzahl von keramischen Bauelementen eines keramischen Bauelementblockes mit den Merkmalen des Patentanspruchs 3 gelöst.

Demnach wird erfindungsgemäß eine Drahtsäge zum Trennen einer Vielzahl von keramischen Bauelementen aus einem keramischen Bauelementeblock vorgeschlagen, welche ein Rollensystem aufweist, welches eine Vielzahl von Umlenkrollen hat, welche einen Draht zur Ausbildung einer Drahtharfe führen, wobei zumindest eine der Umlenkrollen in getrennte Scheiben unterteilt ist, über welche jeweils eine einzelne Drahtwicklung des Drahtes geführt ist und welche jeweils um einen einstellbaren Winkel α kleiner 90° (α < 90°) zu einer die Mittelpunkte der Scheiben verbindenden Achse geneigt sind.

Weiterhin wird ein Verfahren zum Herstellen einer Drahtsäge zum Trennen einer Vielzahl von keramischen Bauelementen aus einem keramischen Bauelementeblock vorgeschlagen, welches folgende Schritte aufweist:
- Bereitstellen eines Rollensystems mit einer Anzahl von Umlenkrollen, welche einen Draht zur Ausbildung einer Drahtharfe führen;
- Teilen zumindest einer der Umlenkrollen in getrennte Scheiben;
- Führen jeweils einer einzelnen Drahtwicklung des Drahtes über eine getrennte Scheibe; und
- Neigen der getrennten Scheiben um einen einstellbaren Winkel α kleiner 90° (α < 90°) zu einer die Mittelpunkte der Scheiben verbindenden Achse.

Des Weiteren wird ein Verfahren zum Trennen einer Vielzahl von keramischen Bauelementen aus einem keramischen Bauelementeblock vorgeschlagen, welches die folgenden Schritte aufweist:
- Bereitstellen einer wie oben erläuterten Drahtsäge;
- Bereitstellen des Bauelementeblockes; und
- Zersägen des bereitgestellten Bauelementeblockes in die Vielzahl der Bauelemente mittels der bereitgestellten Drahtsäge.

Dabei wird ein Versatz zwischen parallelen Drahtabschnitten der Drahtharfe zur Einstellung einer Schnittbreite der Drahtsäge in Abhängigkeit des vorbestimmten Durchmessers der Scheiben und des einstellbaren Winkels eingestellt.

Ein Vorteil der vorliegenden Erfindung besteht darin, dass durch die Verwendung der erfindungsgemäßen Drahtsäge eine einfache und auch kostengünstige Möglichkeit bereitgestellt ist, keramische Bauelemente, wie Piezo-Stapel oder Piezo-Stacks, aus einem keramischen Bauelementeblock zu vereinzeln.

Ein weiterer Vorteil besteht darin, dass durch das Neigen der getrennten Scheiben eine größere Schnittbreite für die keramischen Bauelemente bereitgestellt ist und/oder eingestellt werden kann. Weiterhin werden der Draht und die Scheiben erfindungsgemäß wenig beansprucht, da der Draht bzw. die Drahtwicklung stets gerade und somit mit minimaler Reibung über die Scheiben läuft.

Vorteilhafte Ausgestaltungen und Weiterbildungen der Erfindung ergeben sich aus den Unteransprüchen sowie der Beschreibung unter Bezugnahme auf die Zeichnungen.

Erfindungsgemäß ist eine Einstellvorrichtung vorgesehen. Die Einstellvorrichtung stellt einen Versatz zwischen parallelen

Drahtabschnitten der Drahtharfe zur Einstellung einer Schnittbreite für die keramischen Bauelemente in Abhängigkeit eines vorbestimmten Durchmessers der Scheiben und des einstellbaren Winkels zwischen der Scheibenebene und der die Mittelpunkte der Scheiben verbindenden Achse ein. Durch die erfindungsgemäße Möglichkeit der Einstellung der Schnittbreite kann die erfindungsgemäße Drahtsäge applikationsunabhängig eingesetzt werden, d.h. mit nur einer Drahtsäge können keramische Bauelemente verschiedener Dicke hergestellt werden.

Gemäß einer bevorzugten Ausgestaltung der Erfindung ist der Bauelementeblock oder Grünblock als ein Stapel ausgebildet, in welchem eine Vielzahl von Keramik-Grünfolien oder Piezo-Keramik-Grünfolien bzw. Piezo-Schichten alternierend mit einem Innenelektrodenmaterial angeordnet wird.

Gemäß einer weiteren bevorzugten Ausgestaltung wird das keramische Bauelement als ein Piezo-Stapel oder Piezo-Stack ausgebildet, in welchem eine Vielzahl N von ersten Innenelektroden und eine Vielzahl N von zweiten Innenelektroden angeordnet wird, wobei eine Piezo-Keramik-Grünfolie oder Piezo-Schicht zwischen einer ersten Innenelektrode und einer zweiten Innenelektrode angeordnet wird und die Anzahl N erster Innenelektroden mit einer ersten Außenelektrode und die Vielzahl N zweiter Innenelektroden mit einer zweiten Außenelektrode kontaktierbar ist.

Weiterhin wird erfindungsgemäß vorgeschlagen, einen wie oben erläutert hergestellten Piezo-Stapel oder Piezo-Stack für die Herstellung eines Piezo-Aktors zu verwenden. Weiter wird ein Einspritzsystem zum Einspritzen von Kraftstoff unter einem vorbestimmten Kraftstoffdruck vorgeschlagen, das einen solchen Piezo-Aktor mit einem solchen Piezo-Stapel aufweist, wobei der Piezo-Aktor zum Heben und Senken einer Düsennadel geeignet ist, welche eine Düse öffnet und schließt, mittels der der Kraftstoff eingespritzt wird.

Die Erfindung wird nachfolgend anhand der in den schematischen Figuren angegebenen Ausführungsbeispiele näher erläutert. Es zeigen:
- Fig. 1A: eine schematische Längsschnittansicht einer herkömmlichen Drahtsäge;
- Fig. 1B: eine schematische Querschnittsansicht der herkömmlichen Drahtsäge gemäß Fig. 1A;
- Fig. 2A: eine schematische Längsschnittansicht eines Ausführungsbeispiels der erfindungsgemäßen Drahtsäge;
- Fig. 2B: eine schematische Querschnittsansicht des Ausführungsbeispiels der erfindungsgemäßen Drahtsäge gemäß Fig. 2A;
- Fig. 3: die schematische Längsschnittansicht des Ausführungsbeispiels der erfindungsgemäßen Drahtsäge gemäß Fig. 2A mit einem schematisch dargestellten Bauelementeblock;
- Fig. 4: ein schematisches Ablaufdiagramm eines Ausführungsbeispiels des erfindungsgemäßen Verfahrens zum Herstellen einer Drahtsäge;
- Fig. 5: ein schematisches Blockschaltbild eines Piezo-Stapels, der nach dem Verfahren gemäß Fig. 4 hergestellt ist; und
- Fig. 6: ein schematisches Ablaufdiagramm eines Ausführungsbeispiels des erfindungsgemäßen Verfahrens zum Trennen einer Vielzahl von keramischen Bauelementen aus einem keramischen Bauelementeblock.

In allen Figuren sind gleiche bzw. funktionsgleiche Elemente und Vorrichtungen - sofern nichts anderes angegeben ist - mit denselben Bezugszeichen versehen.

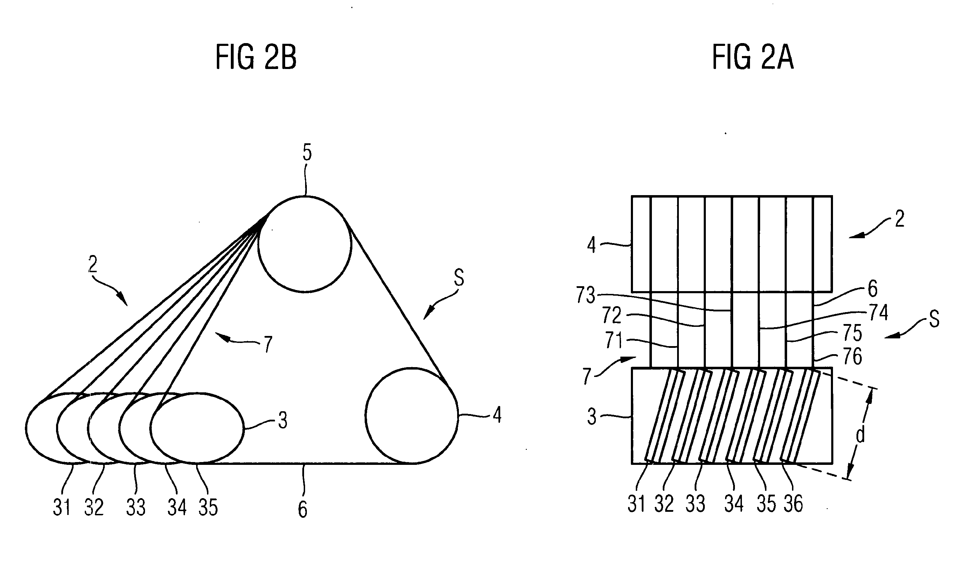

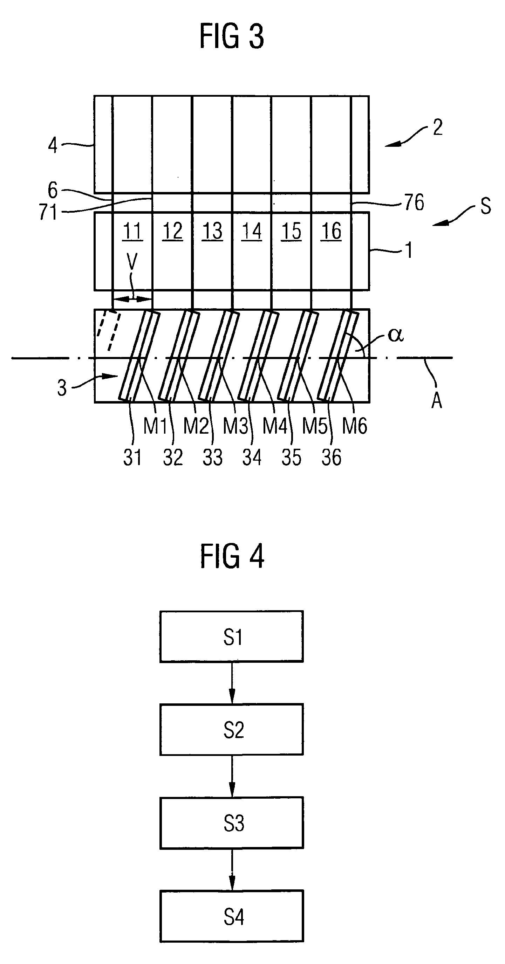

Die Fig. 2A und 2B zeigen eine schematische Längsschnittansicht bzw. eine schematische Querschnittsansicht eines Ausführungsbeispiels der erfindungsgemäßen Drahtsäge S. Dieses Ausführungsbeispiel der Drahtsäge DS wird weiter illustriert durch die Fig. 3, welche die schematische Längsschnittansicht gemäß Fig. 2A mit einem schematisch dargestellten keramischen Bauelementeblock 1 zeigt. Die Drahtsäge S ist zum Trennen einer Vielzahl von keramischen Bauelementen 11-16 aus dem keramischen Bauelementeblock 1 geeignet. Dazu weist die Drahtsäge S ein Rollensystem 2 auf, welches eine Anzahl von Umlenkrollen 3-5 aufweist. Ohne Einschränkung der Allgemeinheit sind in den Fig. 2A, 2B und 3 zwei bzw. drei Umlenkrollen 3-5 dargestellt. Die Umlenkrollen 3-5 führen einen Draht 6 oder Endlosdraht zur Ausbildung einer Drahtharfe 7. Der Draht 6 bzw. dessen Drahtwicklungen 61-66 bzw. dessen Drahtabschnitte 71-76 ist/sind beispielsweise als ein diamantbesetzter Sägedraht ausgebildet.

Zumindest eine der Umlenkrollen 3-5 ist in getrennte Scheiben 31-36 eines vorbestimmten Durchmessers d unterteilt. Ohne Einschränkung der Allgemeinheit ist in den Fig. 2A, 2B und 3 nur die Umlenkrolle 3 in die Scheiben 31-36 geteilt bzw. zerteilt.

Über die getrennten Scheiben 31-36 ist jeweils eine einzelne Drahtwickelung 61-66 des Drahtes 6 geführt. Des Weiteren sind die getrennten Scheiben 31-36 jeweils um einen einstellbaren Winkel α, α < 90°, zu einer die Mittelpunkte M1-M6 der Scheiben 31-36 verbindenden Achse A geneigt.

Vorzugsweise ist eine Einstellvorrichtung (nicht gezeigt) vorgesehen, welche in Abhängigkeit des vorbestimmten Durchmessers d und des einstellbaren Winkels α einen Versatz V zwischen parallelen Drahtabschnitten 71-76 der Drahtharfe zur Einstellung einer Schnittbreite für die keramischen Bauelemente 11-16 einstellt. Vorzugsweise ist der Bauelementeblock 1, gezeigt in Fig. 3, als ein Stapel ausgebildet, in welchem eine Vielzahl von Piezo-Keramik-Grünfolien alternierend mit einem Innenelektrodenmaterial angeordnet wird.

Ferner ist das keramische Bauelement 11-16 vorzugsweise als ein Piezo-Stapel ausgebildet.

Fig. 4 zeigt ein schematisches Ablaufdiagramm eines Ausführungsbeispiels des erfindungsgemäßen Verfahrens zum Herstellen einer Drahtsäge S. Nachfolgend wird das erfindungsgemäße Verfahren anhand des Ablaufdiagramms in Fig. 4 und der Schnittansichten der Fig. 2A, 2B und 3 erläutert. Das erfindungsgemäße Verfahren gemäß Fig. 4 zum Herstellen einer Drahtsäge S zum Trennen einer Vielzahl von keramischen Bauelementen 11-16 aus einem keramischen Bauelementeblock 1 weist die folgenden Verfahrensschritte S1-S4 auf:

### Verfahrensschritt S1:

Es wird ein Rollensystem 2 mit einer Anzahl, welche beispielsweise drei ist, von Umlenkrollen 3-5 bereitgestellt, welche einen Draht 6 oder Endlosdraht zur Ausbildung einer Drahtharfe 7 führen.

### Verfahrensschritt S2:

Zumindest eine der Umlenkrollen 3 wird in getrennte Scheiben 31-36 eines vorbestimmten Durchmessers d und mit einer vorbestimmten Dicke geteilt.

### Verfahrensschritt S3:

Eine einzelne Drahtwicklung 61-66 des Drahtes 6 wird über eine getrennte Scheibe 31-36 geführt.

### Verfahrensschritt S4:

Die getrennten Scheiben 31-36 werden um einen einstellbaren Winkel α, α < 90°, zu einer die Mittelpunkte M1-M6 der Scheiben 31-36 verbindenden Achse A geneigt.

Vorzugsweise wird ein Versatz V zwischen parallelen Drahtabschnitten 71-76 der Drahtharfe 7 zur Einstellung einer Schnittbreite der Drahtsäge S in Abhängigkeit des vorbestimmten Durchmessers d der Scheiben 31-36 und des einstellbaren Winkels α eingestellt.

Vorzugsweise ist der Bauelementeblock 1 oder Grünblock als ein Stapel ausgebildet, in welchem eine Vielzahl von Piezo-Keramik-Grünfolien oder Piezo-Schichten alternierend mit einem Innenelektrodenmaterial bzw. einer Schicht aus einem Elektrodenmaterial angeordnet wird.

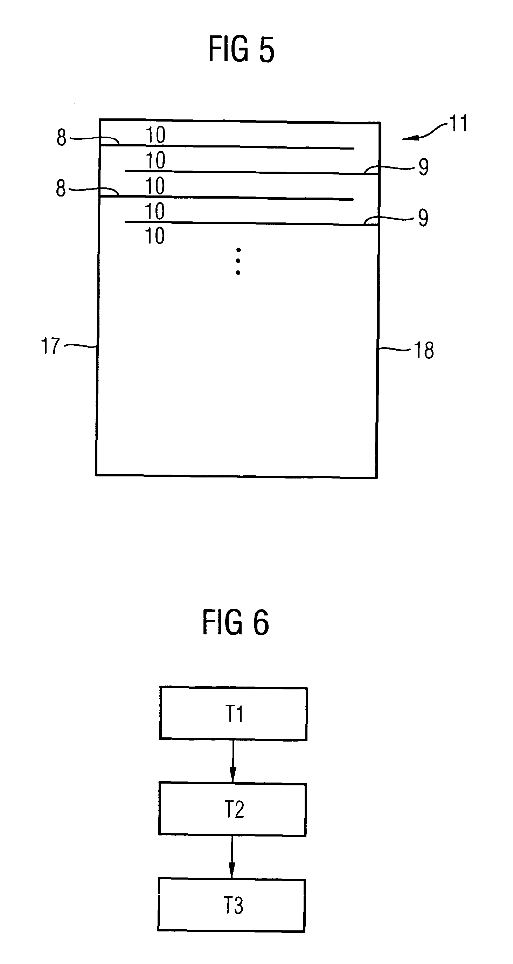

Dazu zeigt Fig. 5 ein schematisches Blockschaltbild eines Piezo-Stapels 11, welcher nach dem Verfahren gemäß Fig. 4 hergestellt ist. Der Piezo-Stapel 11 gemäß Fig. 5 ist eine mögliche Ausbildung eines keramischen Bauelementes 11-16. In dem Piezo-Stapel 11 wird vorzugsweise eine Vielzahl N von ersten Innenelektroden 8 und eine Vielzahl N von zweiten Elektroden 9 angeordnet, wobei eine Piezo-Keramik-Grünfolie 10 zwischen einer ersten Innenelektrode 8 und einer zweiten Innenelektrode 9 angeordnet wird und die Vielzahl N erster Innenelektroden 8 mit einer ersten Außenelektrode 17 und die Vielzahl N zweiter Innenelektroden 9 mit einer zweiten Außenelektrode 18 kontaktierbar ist.

In Fig. 6 ist ein schematisches Ablaufdiagramm eines Ausführungsbeispiels des erfindungsgemäßen Verfahrens zum Trennen einer Vielzahl von keramischen Bauelementen 11-16 aus einem keramischen Bauelementeblock 1 dargestellt. Folgend wird dieses Ausführungsbeispiel des Verfahrens anhand des Ablaufdiagramms in Fig. 6 unter Verweis auf die Schnittansichten der Fig. 2A, 2B und 3 erläutert. Das erfindungsgemäße Verfahren gemäß Fig. 6 weist die folgenden Verfahrensschritte T1-T3 auf:

### Verfahrensschritt T1:

Es wird eine Drahtsäge S gemäß der Fig. 2A, 2B und 3 bereitgestellt.

### Verfahrensschritt T2:

Es wird ein Bauelementeblock 1 bereitgestellt, der vorzugsweise als ein Stapel ausgebildet ist, in welchem eine Vielzahl von Piezo-Keramik-Grünfolien alternierend mit einem Innenelektrodenmaterial angeordnet wird.

### Verfahrensschritt T3:

Der bereitgestellte Bauelementeblock 1 wird in die Vielzahl der Bauelemente 11-16 mittels der bereitgestellten Drahtsäge S zersägt oder zerteilt.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Beispielsweise ist es denkbar, die Drahtsäge gemäß der Fig. 2A, 2B und 3 zur Herstellung eines Piezo-Stapels zu verwenden, der wiederum bei der Herstellung eines Piezo-Aktors eingesetzt wird. Dieser Piezo-Aktor kann wiederum bei der Herstellung eines Einspritzsystems zum Einspritzen von Kraftstoff unter einem vorbestimmten Kraftstoffdruck verwendet werden. Dann wird der Piezo-Aktor derart ausgestaltet, dass er zum Heben und Senken einer Düsennadel geeignet ist, welcher eine Düse öffnet und schließt, mittels der der Kraftstoff eingespritzt wird.

## Patentansprüche

1. Drahtsäge (S) zum Trennen einer Vielzahl von keramischen Bauelementen (11-16) aus einem keramischen Bauelementeblock (1) mit einem Rollensystem (2), welches eine Vielzahl von Umlenkrollen (3-5) aufweist, welche einen Draht (6) zur Ausbildung einer Drahtharfe (7) führen, **dadurch gekennzeichnet, dass**
- zumindest eine der Umlenkrollen (3) in getrennte Scheiben (31-36) unterteilt ist, über welche eine einzelne Drahtwicklung (61-66) des Drahtes (6) geführt ist und welche um einen einstellbaren Winkel (α) kleiner 90° zu einer die Mittelpunkte (M1-M6) der Scheiben (31-36) verbindenden Achse (A) geneigt ist, und
- eine Einstellvorrichtung vorgesehen ist, welche einen Versatz (V) zwischen parallelen Drahtabschnitten (71-76) der Drahtharfe zur Einstellung einer Schnittbreite der Drahtsäge (S) in Abhängigkeit eines vorbestimmten Durchmessers (d) der Scheiben (31-36) und des einstellbaren Winkels (α) einstellt.

2. Verfahren zum Herstellen einer Drahtsäge (S) zum Trennen einer Vielzahl von keramischen Bauelementen (11-16) aus einem keramischen Bauelementeblock (1), mit den Schritten:
- Bereitstellen eines Rollensystems (2) mit einer Anzahl von Umlenkrollen (3-5), welche einen Draht (6) zur Ausbildung einer Drahtharfe (7) führen;
- Teilen zumindest einer der Umlenkrollen (3) in getrennte Scheiben (31-36);
- Führen jeweils einer einzelnen Drahtwicklung (61-66) des Drahtes (6) über eine getrennte Scheibe (31-36); und
- Neigen der getrennten Scheiben (31-36) um einen einstellbaren Winkel α < 90° zu einer die Mittelpunkte (M1-M6) der Scheiben (31-36) verbindenden Achse (A),
wobei ein Versatz (V) zwischen parallelen Drahtabschnitten (71-76) der Drahtharfe (7) zur Einstellung einer Schrittbreite der Drahtsäge (S) in Abhängigkeit eines vorbestimmten Durchmessers (d) der Scheiben (31-36) und des einstellbaren Winkels (α) eingestellt wird.

3. Verfahren zum Trennen einer Vielzahl von keramischen Bauelementen (11-16) aus einem keramischen Bauelementeblock (1) mit den Schritten:
- Bereitstellen einer Drahtsäge (S) nach Anspruch 1;
- Bereitstellen eines Bauelementeblocks (1); und
- Zersägen des bereitgestellten Bauelementeblocks (1) in die Vielzahl der Bauelemente (11-16) mittels der bereitgestellten Drahtsäge (S).

4. Verfahren nach Anspruch 3,
**dadurch gekennzeichnet,**
**dass** der Bauelementeblock (1) als ein Stapel ausgebildet ist, in welchem eine Vielzahl von Keramik-Grünfolien oder Piezo-Keramik-Grünfolien alternierend mit einem Innenelektrodenmaterial angeordnet wird.

5. Verfahren nach Anspruch 3 oder 4,
**dadurch gekennzeichnet,**
**dass** das keramische Bauelement (11-16) als ein Piezo-Stapel (11) ausgebildet wird, in welchem eine Vielzahl N von ersten Innenelektroden (8) und eine Vielzahl N von zweiten Innenelektroden (9) angeordnet werden, wobei eine Piezo-Keramik-Grünfolie (10) zwischen einer ersten Innenelektrode (8) und einer zweiten Innenelektrode (9) angeordnet wird und die Vielzahl N erster Innenelektroden (8) mit einer ersten Außenelektrode (17) und die Vielzahl N zweiter Innenelektroden (9) mit einer zweiten Außenelektrode (18) kontaktierbar ist.

## Claims

1. Wire saw (S) for separating a plurality of ceramic components (11-16) from a ceramic component block (1) with a roller system (2) featuring a plurality of deflection rollers (3-5) which guide a wire (6) for embodying a wire harp (7), **characterised in that**
- at least one of the deflection rollers (3) is divided up into separate disks (31-36) via which an individual wire winding (61-66) of the wire (6) is guided and which are inclined at a selectable angle (α) of less than 90° to an axle (A) connecting the centres (M1-M6) of the disks (31-36), and
- an adjustment facility is provided which adjusts an offset (V) between parallel wire sections (71-76) of the wire harp to set a cut width of the wire saw (S) as a function of a predefined diameter (d) of the disks (31-36) and the adjustable angle (α).

2. Method for producing a wire saw (S) for separating a plurality of ceramic components (11-16) from a ceramic component block (1), with the following steps:
- Provision of a roller system (2) with a number of deflection rollers (3-5) which guide a wire (6) for embodying a wire harp (7);
- Division of at least one of the deflection rollers (3) into separate disks (31-36);
- Guiding of an individual wire winding (61-66) of the wire (6) over a separate disk (31-36); and
- Inclining the separate disks (31-36) at an adjustable angle α < 90°, to an axle A connecting the centre points (M1-M6) of the disks),
wherein an offset (V) between parallel wire sections (71-76) of the wire harp (7) is set to adjust a cutting width of the wire saw (S) as a function of a predefined diameter (d) of the disks (31-36) and of the adjustable angle (α).

3. Method for separating a plurality of ceramic components (11-16) from a ceramic component block (1) with the following steps:
- Providing a wire saw (S) according to claim 1
- Providing a component block (1); and
- Sawing of the component block (1) provided into the plurality of the components (11-16) by means of the wire saw (S) provided.

4. Method according to claim 3,
**characterised in that**
the component block (1) is embodied as a stack in which a plurality of ceramic green films or piezoceramic green films are arranged alternately with an internal electrode material.

5. Method according to claim 3 or 4,
**characterised in that**
the ceramic component (11-16) is embodied as a piezo stack (11) in which a plurality N of first internal electrodes (8) and a plurality N of second internal electrodes (9) are arranged, with a piezoceramic green film (10) being arranged between a first internal electrode (8) and a second internal electrode (9) and the plurality N of first internal electrodes (8) able to be contacted by a first external electrode (17) and the plurality N of second internal electrodes (9) by a second external electrode (18).

## Revendications

1. Scie à fil (S) pour découper une pluralité de composants céramiques (11-16) dans un bloc de composants céramiques (1), comprenant un système à rouleaux (2), lequel présente une pluralité de rouleaux de renvoi (3-5) qui guident un fil (6) de manière à former une harpe à fil (7), **caractérisée en ce que**
- au moins l'un des rouleaux de renvoi (3) est divisé en disques séparés (31-36) sur lesquels est guidé un enroulement de fil individuel (61-66) du fil (6) et lesquels sont inclinés d'un angle réglable (α) inférieur à 90° par rapport à un axe (A) reliant les centres (M1-M6) des disques (31-36), et
- un dispositif de réglage est prévu, lequel règle un décalage (V) entre des segments de fil parallèles (71-76) de la harpe à fil, de manière à ajuster une largeur de coupe de la scie à fil (S) en fonction d'un diamètre prédéterminé (d) des disques (31-36) et de l'angle réglable (α).

2. Procédé de fabrication d'une scie à fil (S) pour découper une pluralité de composants céramiques (11-16) dans un bloc de composants céramiques (1), comprenant les étapes :
- fournir un système à rouleaux (2) présentant un nombre de rouleaux de renvoi (3-5) qui guident un fil (6) de manière à former une harpe à fil (7) ;
- diviser au moins l'un des rouleaux de renvoi (3) en disques séparés (31-36) ;
- guider à chaque fois un enroulement de fil individuel (61-66) du fil (6) sur un disque séparé (31-36) ; et
- incliner les disques séparés (31-36) d'un angle réglable
α < 90° par rapport à un axe (A) reliant les centres (M1-M6) des disques (31-36),
dans lequel on règle un décalage (V) entre des segments de fil parallèles (71-76) de la harpe à fil (7), de manière à ajuster une largeur de coupe de la scie à fil (S) en fonction d'un diamètre prédéterminé (d) des disques (31-36) et de l'angle réglable (α).

3. Procédé pour découper une pluralité de composants céramiques (11-16) dans un bloc de composants céramiques (1), comprenant les étapes :
- fournir une scie à fil (S) selon la revendication 1 ;
- fournir un bloc de composants (1) ; et
- scier ledit bloc de composants (1) en ladite pluralité de composants (11-16) au moyen de ladite scie à fil fournie (S).

4. Procédé selon la revendication 3,
**caractérisé en ce que**
le bloc de composants (1) est réalisé sous forme d'un empilement, dans lequel on dispose une pluralité de feuilles vertes céramiques ou feuilles vertes céramiques piézoélectriques en alternance avec un matériel formant électrode intérieure.

5. Procédé selon la revendication 3 ou la revendication 4, **caractérisé en ce que**
le composant céramique (11-16) est réalisé sous forme d'un empilement piézoélectrique (11), dans lequel on dispose une pluralité N de premières électrodes intérieures (8) et une pluralité N de deuxièmes électrodes intérieures (9), une feuille verte céramique piézoélectrique (10) étant disposée entre une première électrode intérieure (8) et une deuxième électrode intérieure (9), et ladite pluralité N de premières électrodes intérieures (8) pouvant être mise en contact avec une première électrode extérieure (17) et ladite pluralité N de deuxièmes électrodes (9) avec une deuxième électrode extérieure (18).
